# EUROPEAN PATENT SPECIFICATION

(11) **EP 0 942 215 B1**
(45) Date of publication and mention of the grant of the patent: **24.10.2001**
(21) Application number: 99303781.1
(22) Date of filing: 14.05.1999
(51) Int. Cl.: F16K 35/10

(54) **Lock assembly**
Verriegelungseinrichtung
Assemblage de verrouillage

(30) Priority: 14.05.1998 GB 9810220; 23.07.1998 GB 9815996; 22.02.1999 GB 9903940
(43) Date of publication of application: 15.09.1999
(73) Proprietor: Smith Flow Control Limited, Witham, Essex CM8 3YQ (GB)
(72) Inventor: Metson, Michael George, Chelmsford, Essex CM1 4EH (GB); Cooper, Frank, Clacton on Sea, Essex CO16 8JB (GB); McHugh, Harry, St. Neots, Cambridgeshire PE19 3HH (GB)
(74) Representative: Gillam, Francis Cyril

(56) References cited:
- DE-A- 1 805 124
- GB-A- 2 158 560
- GB-A- 2 254 103
- US-A- 4 519 580
- US-A- 5 353 833

## Description

This invention relates to a lock assembly for a mechanism having a rotatable operating component, such as a hand-wheel or operating lever on a valve or gearbox.

The invention is particularly - but not exclusively - concerned with the locking of a valve hand-wheel against unauthorised operation. Thus, in the following, the invention will primarily be described in connection with this intended use, though it is to be understood that the invention is not to be regarded as limited to this use.

A known form of valve often employed in pipe-lines, chemical processing plants and other areas of industry has a valve body in which is located a valve member able to close and open a passageway through the valve body. The valve member is secured to a threaded stem which projects through a seal mounted on the valve body, usually provided in a component referred to as a bonnet or top-works, which latter term will be used hereinafter. A hand-wheel has a threaded bore engaged with the stem and is rotatably secured to the valve body, at the end of the top-works remote from the body. Rotation of the hand-wheel causes the stem to rise and fall (i.e. project more or less) with respect to the body, so respectively opening and closing the passageway. Other valves commonly employed in industry include ball valves, where a valve member is moved between open and closed positions by one quarter of a turn of an operating lever, and gear box valves where a reduction gearbox is fitted to a drive shaft for the valve member and an operating hand-wheel is provided on the input shaft of the gearbox, that hand-wheel requiring many turns to drive the valve member between its open and closed positions.

In many industries, it is desirable for a valve to be locked in a given setting, usually either fully open or fully closed, in order to ensure safety in operation of a plant within which the valve is incorporated. At its simplest, this can be achieved by means of a padlock and chain, with the chain passing around a pipe and through an aperture in the valve hand-wheel or other operating component. Unfortunately, there is no guarantee that an operator will properly have locked a valve against unauthorised operation just because the operator returns to a central store the key for the padlock; either deliberately or in error, the chain may not be passed properly around a pipe and through an aperture in the operating component prior to having its ends secured together by means of the padlock and thus the valve may subsequently be operated without first unlocking the chain.

Another simple handwheel locking arrangement is shown in GB-A-2158560. This uses rigid components which interengage with the handwheel and valve top-works and a padlock to secure the components together. This design still suffers from the same problems as a chain and padlock.

In an attempt to address this problem, various complex mechanisms have been designed for locking the hand-wheel or other operating component of a valve, in a fail-safe manner. Some of these mechanisms are simple locks requiring the presence of a key to permit valve operation but may be modified to permit key removal only when the valve is at one or perhaps two pre-defined settings. Alternatively, a so-called interlock mechanism may be employed, which requires two keys arranged so that both keys must be present for operation of the valve, and only when the valve is fully open may one key be removed, the other key being removable only when the valve is fully closed. In this way, it is possible to ensure that several valves all having similar interlock mechanisms may be operated only in a pre-defined order.

A recognised problem associated with fitting a valve with a lock mechanism is that no significant modification may be made to the valve body, top-works or gearbox if warranties on the valve are not to be voided. Thus, if a valve is to be fitted with a lock mechanism, it is in general necessary to know the precise design of that valve in order that a suitable lock-mechanism may be manufactured and then fitted, expressly to suit that valve.

When a plant is already complete and valves locks are thereafter to be fitted, a survey may be undertaken of the kinds of valves in the plant and the appropriate lock mechanisms manufactured to suit. On the other hand, in the case of the construction of a new plant, and particularly when the plant is in a remote location such as in a third world country, it may not be possible to know precisely what kind of valve will be fitted at any given point in the plant, until construction has been completed. Thus, there is a significant need for a lock mechanism which may be fitted to a wide range of valve designs, irrespective of the manufacturer or particular detailed configuration of that valve.

In an attempt to address the above problems associated with valves, but also to provide a generalised locking arrangement for use with a rotatable component, one aspect of the present invention provides a lock assembly for a component supported externally of a housing and rotatable with respect thereto, which lock assembly comprises:
- a lock mechanism having relatively rotatable first and second parts which may be secured against relative rotation by the locking action of the lock mechanism, the first part being adapted for mounting on the rotatable component on the side thereof remote from the housing;
- an engagement device adapted in use to connect to a fixed part of the housing without significant alteration to the housing; and
- interconnection means arranged to connect both to the engagement device and also to the second part of the lock mechanism so that in use the interconnection means extends over the periphery of the rotatable component whereby the component may be turned when the two parts of the lock mechanism are not locked together.

It will be appreciated that when the lock assembly of this invention is configured for fitting to a valve, the rotatable component comprises a hand-wheel or operating lever for the valve, and the housing comprises the valve body, top-works, or gearbox as the case may be. However, the mechanism may be used to lock a rotatable component used in other circumstances besides industrial valves.

The lock assembly may be fitted to a very wide variety of valve designs and sizes. In the case of arising stem valve or other valve having top-works upstanding from a main valve body, the engagement device conveniently forms a clamp adapted to be secured to the top-works between elements of the clamp. Such elements may be fitted with screw-threaded fasteners, whereby the clamp may simply be tightened on to the top-works. In this case, the interconnection means may comprise a link which extends between the first part of the lock mechanism and the clamp. For the case of a hand-wheel, that interconnection means may be a generally U-shaped strap which is adapted in use to extend around the periphery of the hand-wheel. Alternatively, the effective diameter of the hand-wheel may be reduced by removing at least the peripheral region thereof, so that the interconnection means may more directly interconnect the clamp and the second part of the lock mechanism. For instance, in the case of a spoked hand-wheel, each spoke may be cut through at essentially the same radial position, so permitting removal of the hand-wheel rim and the outer part of each spoke.

When the effective diameter of an existing valve hand-wheel is reduced as described above, the first part of the lock mechanism preferably is provided with an auxiliary operating member for rotating the remainder of the hand-wheel, to which the first part is secured. That auxiliary operating member may also be a hand-wheel of comparable or greater diameter than that of the original valve hand-wheel.

In an alternative embodiment the engagement means may be arranged to interact with a fixed part of the housing; for example, the engagement device may comprise a socket member adapted in use to connect to a projection upstanding from the housing. In this case, the socket member may be mounted in an adjustable manner on a carrier supported by the second part of the lock mechanism, so as to lie on the side of the rotatable component nearer the housing.

In order to minimise the amount of modification needed to an existing mechanism, the first part of the lock mechanism may be attached to the rotatable component (for example, valve hand-wheel) by means of a clamp ring, the component being clamped between the first part of the lock mechanism and the clamp ring. For this purpose, said first part may itself include a ring which is configured to overlie the rotatable component and to be secured thereto, for example using the clamp ring on the other side of the component.

The lock mechanism may have a receptor for a key, the first and second parts of the lock mechanism being secured against relative rotation other than when the appropriate key is in the receptor. In the alternative, the lock mechanism may be in the form of an interlock having two receptors for respective keys, the first and second parts of the lock mechanism being secured against relative rotation other than when both keys are present in their respective receptors. Such a mechanism may permit withdrawal of a key from its receptor only when the valve to which the assembly is fitted is in a predetermined setting. Interlock mechanisms of this kind are well-known, particularly in industrial plants, and will not be described in further detail here.

This invention extends to a fluid-flow control valve having a valve body, top-works within which is mounted a valve stem and a hand-wheel rotatably mounted at the end of the top-works remote from the body, in combination with a lock assembly of this invention as described above and with the first part of the lock mechanism connected to the valve hand-wheel, the engagement device non-rotatably engaging the top-works and the interconnection means extending over the periphery of the hand-wheel and connected at its two ends respectively to the engagement device and the second part of the lock mechanism.

According to another aspect of this invention, there is provided a method of fitting a lock assembly of this invention as described above to a housing having a rotatable hand-wheel mounted thereon, in which method the effective diameter of the hand-wheel is reduced by removing the outer peripheral region of the hand-wheel, the first part of the lock mechanism is secured to the remainder of the hand-wheel, and then in either order or effectively simultaneously the engagement device is engaged with the housing and the interconnection means is connected to both the second part of the lock mechanism and also to the engagement device.

By way of example only, certain specific embodiments of this invention will now be described in detail, reference being made to the accompanying drawings, in which:-
Figure 1A diagrammatically shows a first embodiment of lock assembly of this invention fitted to a rising stem valve, only a part of which valve is shown in Figure 1A;
Figure 1B is a plan view on the assembly of Figure 1A;
Figure 2 is a side view on the lock assembly of Figure 1A but as fitted to a different valve design, the lock assembly having a protective sleeve on its strap;
Figure 3 shows a modified form of the lock assembly of Figure 1A;
Figure 4 shows an embodiment of a lock assembly of this invention but with an alternative strap design; and
Figure 5 shows a further embodiment of lock assembly of this invention.
Figure 6 shows an alternative embodiment of lock assembly, as fitted to a rising stem valve;
Figures 7 and 8 respectively show two further embodiments of lock assembly, the first fitted to a valve device and the second to a gearbox having a rotatable drive shaft;
Figure 9 shows yet another embodiment of lock assembly, suitable for fitting to a wide variety of rotatable members;
Figure 10 is an isometric view on the underside of the assembly of Figure 9; and
Figure 11 is a vertical section through the assembly of Figure 9.

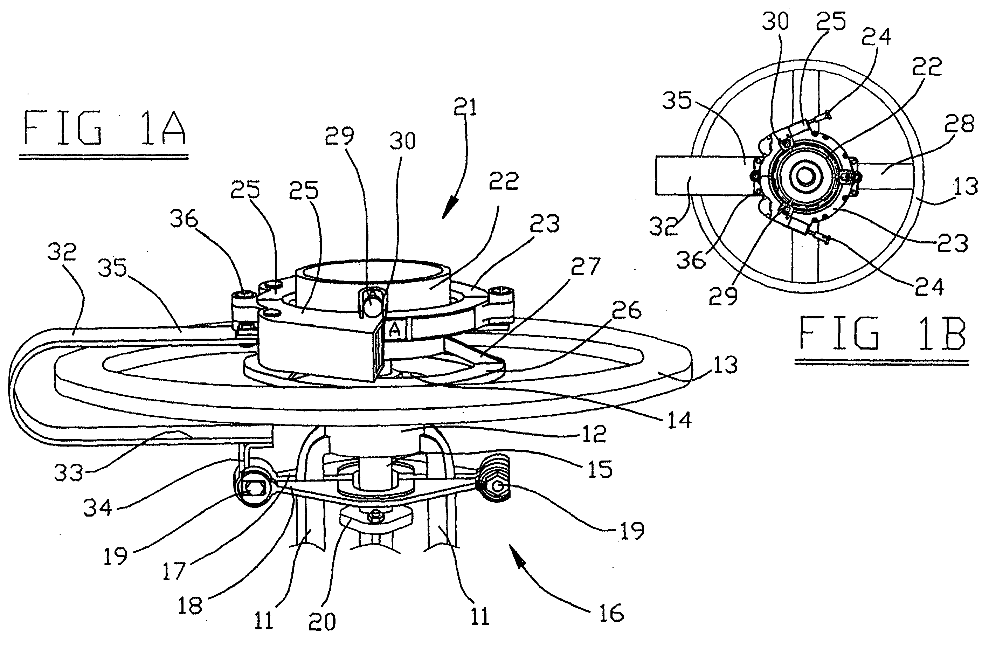

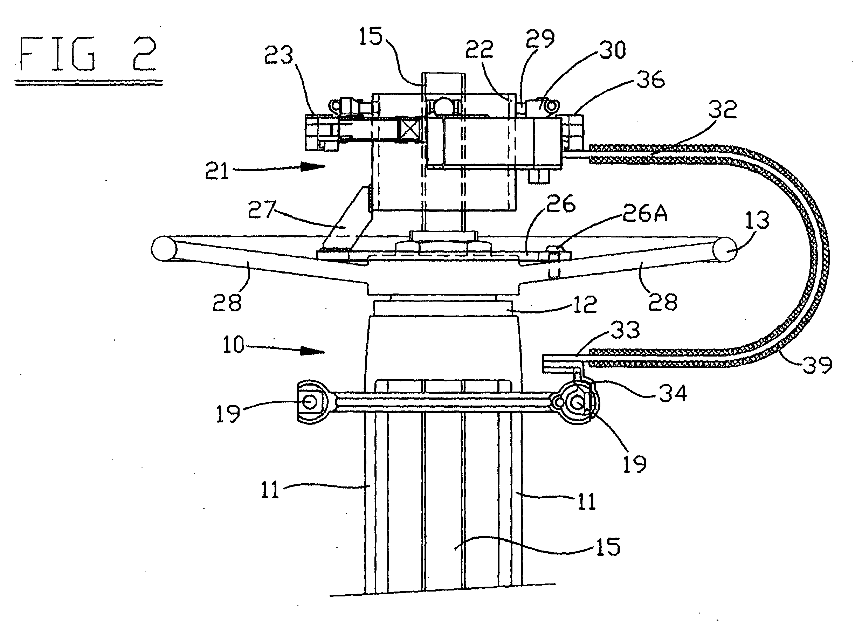

Referring initially to Figures 1A, 1B and 2, there is shown diagrammatically part of an open structure top-works 10 for a rising stem gate valve, the top-works comprising typically a pair of bars 11 attached at their lower ends to the valve body (not shown in the drawings) and supporting at their upper ends a bearing ring 12. A hand-wheel 13 is rotatably mounted on the bearing ring 12, the hand-wheel having a threaded central boss 14 engaged with a threaded valve stem 15. The hand-wheel 13 is held by ring 12 against axial movement, such that on rotation of the hand-wheel, the valve stem 15 is caused to rise or fall with respect to valve body, depending upon the sense of rotation of the hand-wheel, and so opens or closes the valve. As so far described, the parts of the valve are entirely conventional and, in themselves, form no part of the present invention.

The embodiment of lock mechanism includes a clamp 16 secured to the upper part of the valve top-works 10, the clamp comprising two sections 17 and 18 held together by means of clamping bolts 19 extending through aligned apertures at each end of the two sections 17 and 18 of the clamp. The valve stem passes with clearance between the sections 17 and 18 when clamped to bars 11 though the central regions of each clamp section 17, 18 are profiled to permit the valve gland packing arrangement 20 to pass therethrough. The position of the clamp 16 may thus be adjusted along the length of the valve top-works 10, prior to final tightening of the bolts 19, and if necessary to a position below the upper part of the gland packing arrangement 20.

A lock mechanism 21, configured as an interlock, has co-axial first and second parts 22 and 23, arranged for relative rotation whenever two keys 24 (Figure 1B) are inserted in their respective receptors 25 but which parts 22 and 23 are otherwise locked together against rotation. A suitable interlock mechanism for this purpose is well known in the art, and as it forms no part of the present invention, as such, will not be described in further detail here.

The first part 22 is cylindrical and surrounds the valve stem (when raised), and has a mounting ring 26, connected thereto by means of a plurality of webs 27, the mounting ring 26 being attached to the spokes 28 of the hand-wheel 13 by means of screws 26A (Figure 2) passing through holes drilled through both the ring 26 and those spokes. The holes in the spokes may be drilled right through and the screws fitted with nuts, or for greater security, the holes in the spokes may be tapped so that security screws passing through the ring may be threaded into those holes.

The lock mechanism cylindrical first part 22 has three pegs 29 each projecting radially outwardly from the outer cylindrical surface. Each peg is positioned between a respective pair of abutments 30 carried on a ring (not shown) rotatably mounted within the second part 23, whereby the ring will turn with hand-wheel 13. Removal of a key from its receptor locks the ring to the second part 23, but when both keys are inserted, the ring is freed, so permitting the first part 22 to be rotated relative to the second part 23.

A steel strap 32, of generally U-shaped form, extends over the periphery of the hand-wheel 13 and interconnects the clamp 16 and the second part 23 of the lock mechanism. One end 33 of the strap 32 includes a bracket 34 which is held by bolt 19 to the clamp 16, and the other end 35 of the strap 32 is held by bolts 36 to the second part 23. Though ends 33 and 35 of the steel strap 32 may be sprung towards or away from each other to a limited extent, the strap 32 displays considerable rigidity in the direction transverse to its length, so positively holding the second part 23 against rotation.

In use, the hand-wheel 13 is free to rotate only when both keys 24 are present, withdrawal of either one key then locking together the first and second parts of the lock mechanism and so restraining movement of the hand-wheel 13 by virtue of the interconnection of the lock mechanism 21 to the clamp 16, through the strap 32.

The side view of Figure 2, partly cut away for clarity, on the lock mechanism of Figures 1A and 1B, shows the use of a protective sleeve 39 on the strap 32, in order to minimise the risk of injury to an operator, by entrapment of fingers or a hand between the hand-wheel 13 and the strap 32.

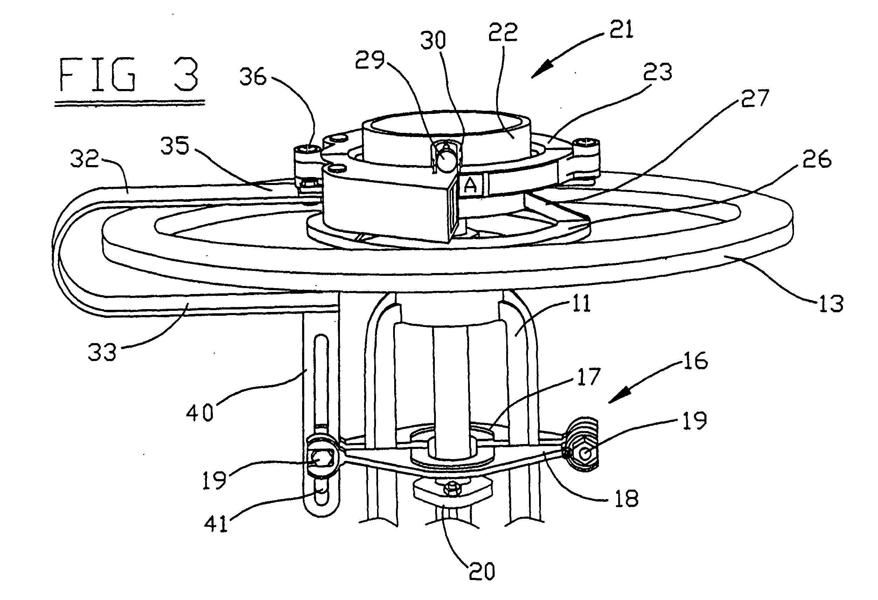

Figure 3 shows a lock assembly similar to that of Figures 1 and 2, and like parts are given like reference characters; those parts will not be described again here. In the embodiment of Figure 3, the one end 33 of the strap 32 is provided with a bracket 40 having an elongate slot 41 through which clamp bolt 19 passes, to secure the strap 32 to the clamp 16. In this way, greater flexibility may be achieved, for mounting the lock assembly on a variety of different valve designs without the need significantly to deform the strap 32.

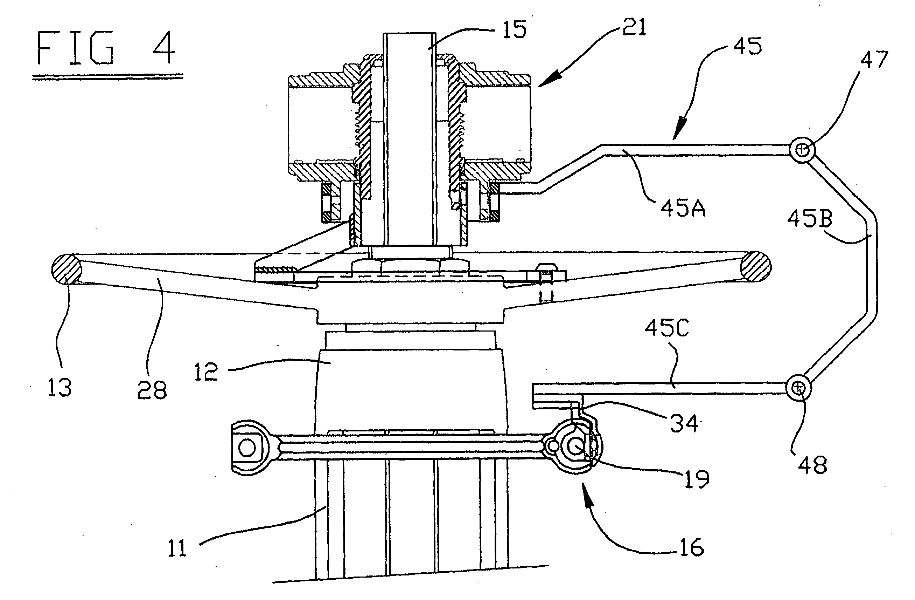

Figure 4 is a side view, partly in section, of a modified form of the lock assembly shown in Figures 1 and 2 and again like parts are given like reference numerals; those parts will not be described again here. The strap 45 in the embodiment of Figure 4 is formed in three pieces 45A, 45B and 45C, hinged together at 47 and 48, for example with security bolts. Part 45C of the strap includes a bracket 34 held by clamp bolt 19 and thus may be set at a suitable position with respect to the clamp, so as to lie at an angle to the true radial plane. In this way, greater flexibility in the mounting of the lock assembly on a valve is obtained. In addition, part 45B of the strap may be changed for another having a more pronounced U-shaped profile, so permitting the accommodation of a hand-wheel of a greater diameter, merely by disconnecting the pivotal connections 47 and 48.

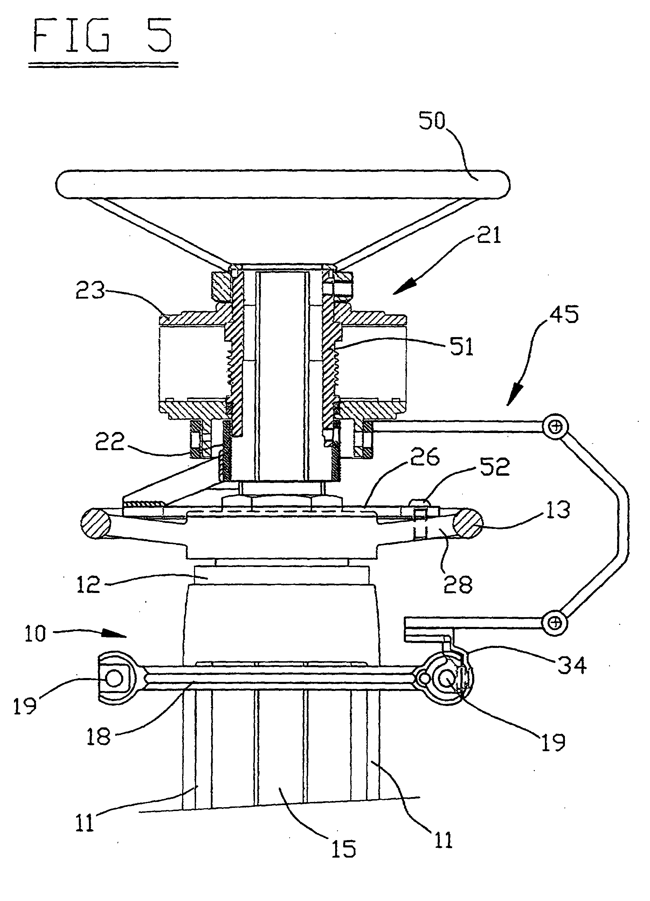

Figure 5 shows another embodiment and like parts with those of previous embodiments are given like reference characters and will not be described again here. In this embodiment, the original hand-wheel 13 of the valve is of relatively small diameter and the mounting of the lock mechanism 21 thereon restricts access to that hand-wheel 13. In order to allow rotation of the hand-wheel to open or close the valve, an auxiliary hand-wheel 50 is mounted on a sleeve 51 extending through the lock mechanism second part 23 and connected to the first part 22 which in turn is attached to the mounting ring 26 secured by bolts 52 to the hand-wheel 13. In this way, and provided both keys are present in the respective receptors of the second part 23, the hand-wheel 13 may be rotated by means of hand-wheel 50, so opening or closing the valve as appropriate.

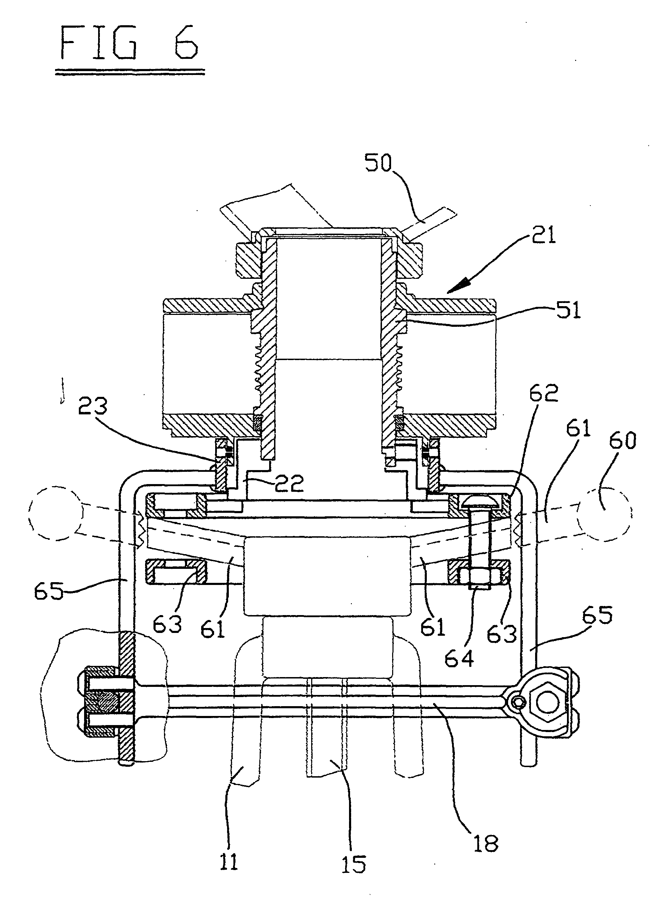

The arrangement shown in Figure 6 is, in effect, a modification of the embodiment shown in Figure 5, except that the configuration of the rising stem valve of Figure 6 differs from that of Figure 5. Like parts in Figure 6 with those of Figure 5 and the other embodiments are given like reference characters and will not be described again here.

The rising stem valve shown in Figure 6 had a hand-wheel 60 (shown partly in broken lines) which was, prior to the fitting of the lock assembly, of a considerably greater diameter than hand-wheel 13 of Figure 5. However, prior to installing the lock assembly shown in Figure 6 (which corresponds to that of Figure 5 except for strap 45), the effective diameter of the hand-wheel 60 is reduced to less than that of hand-wheel 13 in Figure 5, by cutting through the spokes 61 at suitable radial positions. This may be performed relatively easily, using a hacksaw or an angle grinder. Once completed, the outer rim of the hand-wheel together with the outer portions of the severed spokes is discarded and the lock mechanism 21 is secured to the remaining part of the hand-wheel. This may be achieved using bolts 52 screwed into threaded holes formed in the remaining part of each spoke, so as generally to correspond to the arrangement shown in Figure 5, or may be performed using a clamp as shown in Figure 6. Such a clamp has an upper ring 62 and a lower ring 63 with bolts 64 extending therebetween so as securely to clamp the remaining parts of the spokes 61. The exposed outer ends of those remaining parts may be covered by means of a flange (not shown) formed as a part of either upper ring 62 or lower ring 63.

Once the lock mechanism 21 has been attached to the remaining part of the hand-wheel, and the clamp 16 secured to the valve top-works 11, strap 65 may be used to interconnect the clamp 16 to the second part 23 of the lock mechanism 21. As will be appreciated from Figure 6, no part of the clamp nor the strap 65 has a greater radial extent than did the original hand-wheel 60 and thus the lock mechanism shown in Figure 6 may be secured to the valve without there being any greater space requirement.

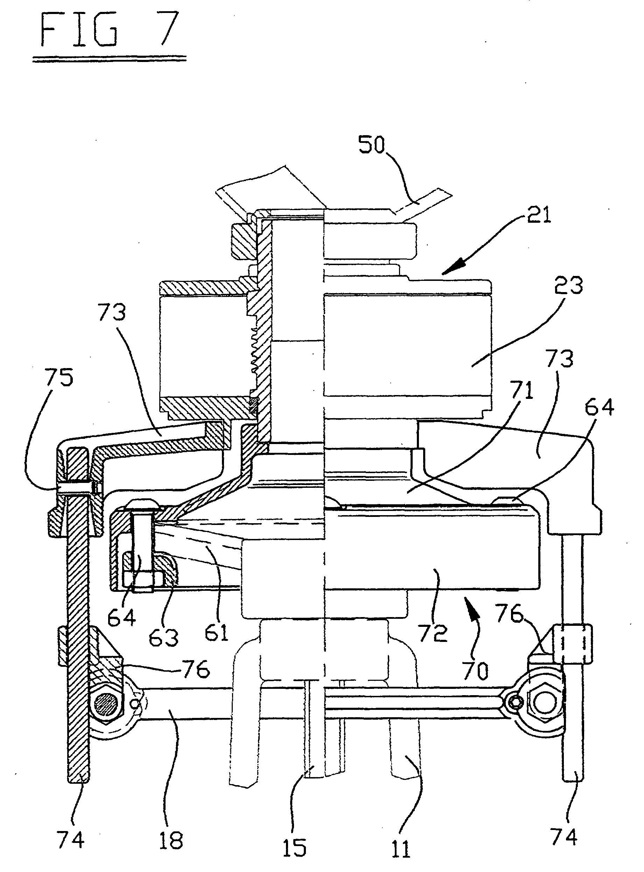

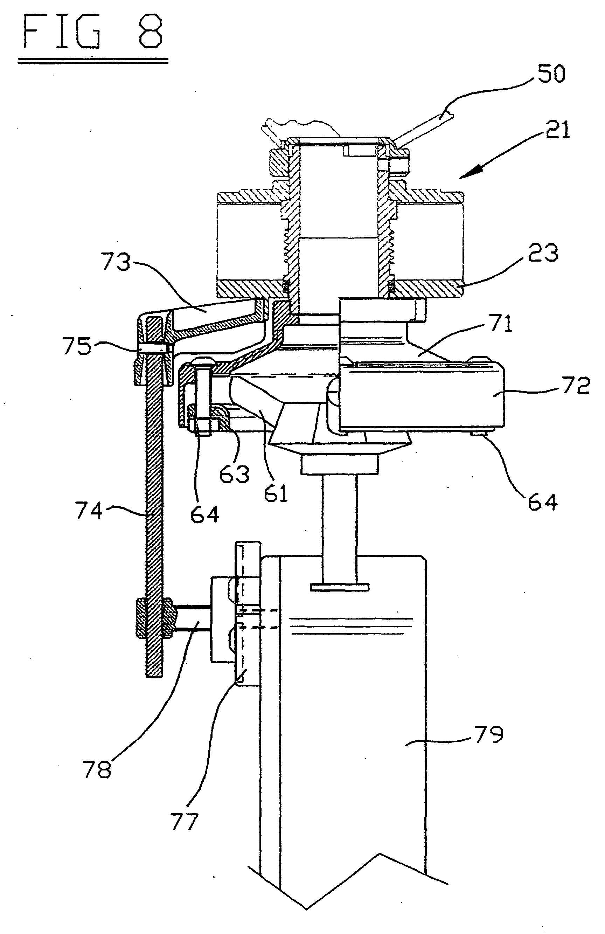

The arrangements shown in Figures 7 and 8 are, in effect, modifications of the embodiment shown in Figure 6. Like parts in Figures 7 and 8 with those of the previous embodiments are given like reference characters and will not be described again here.

In the embodiments of Figures 7 and 8, the lock mechanism first part 70 includes a cover 71 having a downwardly depending peripheral flange 72. The existing operating component (hand-wheel) is cut-away, as has been described with reference to Figure 6, so as to reduce the overall diameter of the component to not more than the internal diameter of the peripheral flange 72. A lower clamp ring 63 is used in conjunction with bolts 64 to clamp the cover 71 to the spokes 61 of the component, in much the same manner as has been described above.

The second part 23 of the lock mechanism 21 is provided with two diametrically opposed anchor arms 73, projecting radially from a central region of the second part. A respective anchor bar 74 is connected by a pin 75 to the radially outer end of each arm, so as to depend downwardly therefrom and each bar 74 is adjustably connected to the clamp arrangement 16 by a link 76.

In the case of the arrangement of Figure 8, only one radially extending anchor arm 73 is provided, that arm having a bar 74 which connects to a housing 77 by an adjustable link 78, the housing 77 being secured to the top-works 79 of the valve. Alternatively, two such arms could be employed.

It will be appreciated that the provision of the first part 70 with a cover 71 and flange 72, shields the ends of the spokes of the original operating component and so is more acceptable in the workplace. In addition, the anchor arrangement serves to secure the second part of the lock mechanism, which typically forms a part of an interlock mechanism, much more securely and is better engineered than in the previous embodiments.

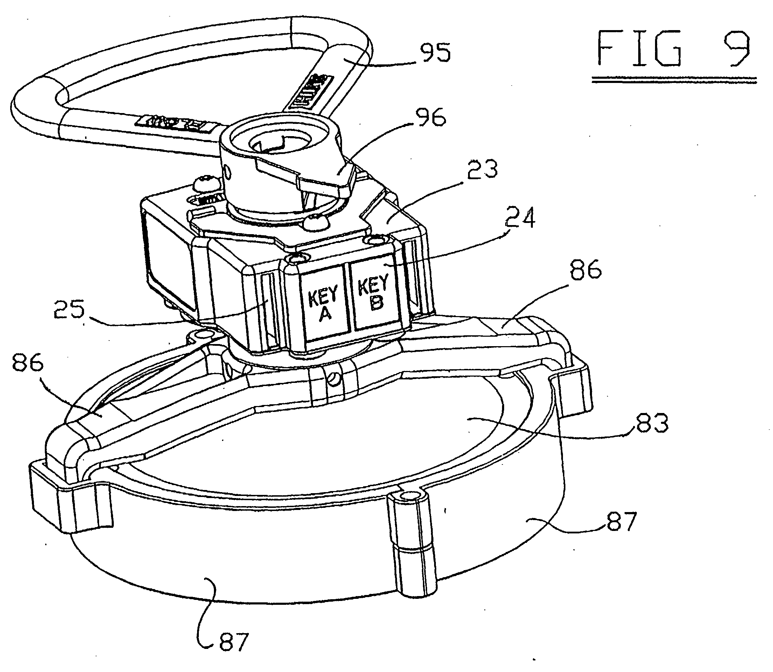

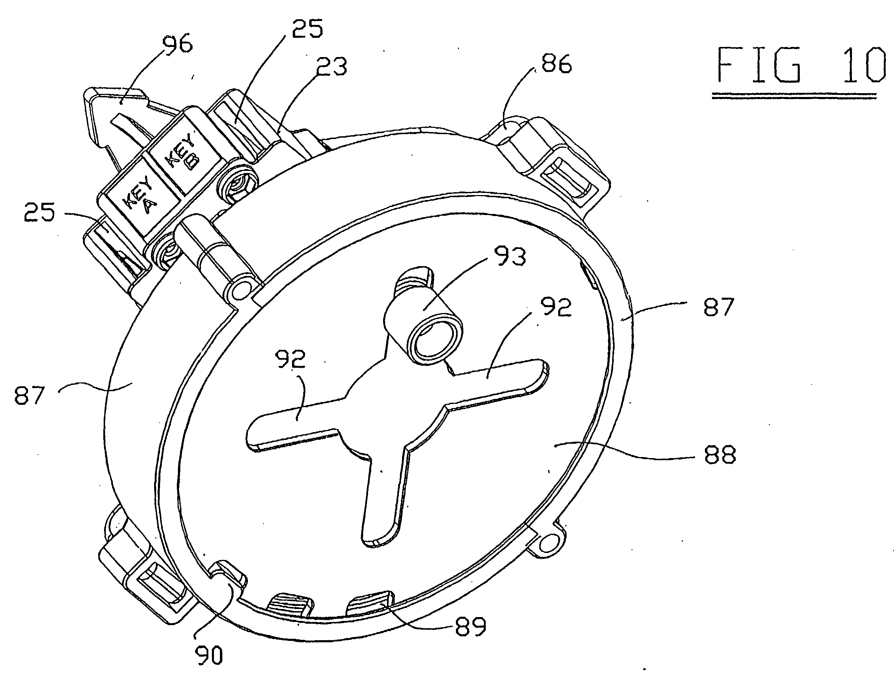

Referring now to Figures 9 to 11, there is shown a further embodiment of this invention not employing a clamp arrangement, but instead an alternative technique for securing the second part of the lock mechanism against rotation. In other respects, this embodiment generally corresponds to those described above, and again like parts are given like reference characters, and will not be described here.

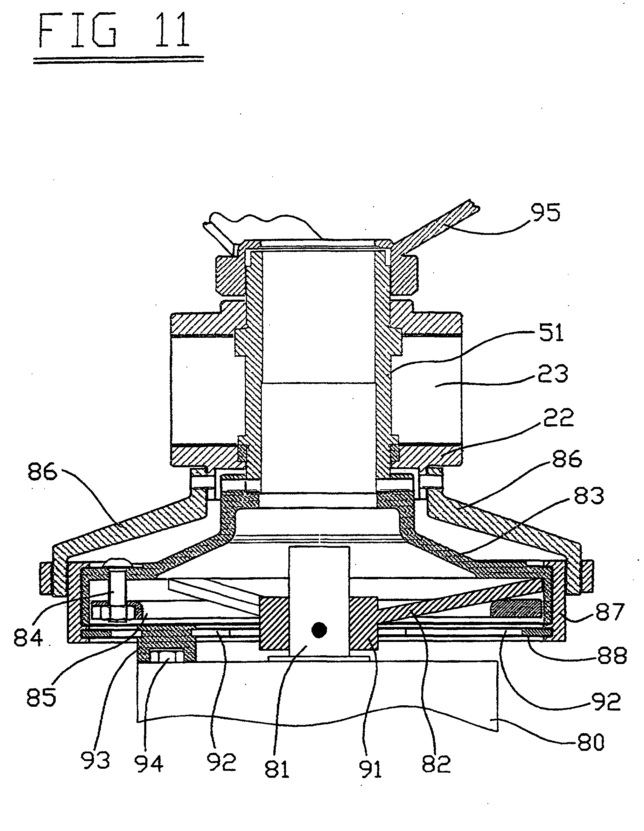

Figure 11 shows a housing 80 from which projects a shaft 81 and to which is secured the remaining part 82 of a hand-wheel, following removal of the hand-wheel rim and outer portions of the spokes, as described with reference to Figure 6. The first part 22 of the lock mechanism 21 is connected to a cover 83 of generally conical shape and which projects downwardly from the first part, the cover 83 being clamped to the remaining spokes 61 of the hand-wheel by means of nuts and bolts 84 extending both through the outer rim of the cover 83 and a clamping ring 85 disposed on the side of the remaining part of the hand-wheel nearer the housing 80. The second part 23 of the mechanism 21 is provided with a pair of opposed arms 86 connected to a split ring 87 which surrounds with clearance the cover 83.

A carrier 88 is arranged to fit within the lower part of the split ring 87 and has a plurality of notches 89, any one of which may receive a lug 90 formed on the inner surface of one part of the split ring 87. The carrier has a central aperture to receive the hub 91 of the remaining part of the hand-wheel and four slots 92 radiate from that central aperture. A socket 93 is slidably supported in a selected one of the slots 92 and when the mechanism is assembled to the housing (Figure 11) a projection on the housing is received in the socket, to prevent the carrier 88 and so also the second part 23 from rotating. In the case of Figure 11, that projection is a bolt 94 though it could be some other projection such as a stop for rotation of an operating lever or even an edge of the housing. The slots 92 permit radial adjustment of the socket 93 to suit the projection from the housing, and the design of socket may be chosen having regard to the nature of the projection - different axial lengths and different diameters of socket may be provided to maximise the range of mechanisms to which the lock may be fitted.

The plurality of notches 89 are provided in conjunction with the four slots 92 to permit the setting of the lock mechanism at a desired orientation with respect to the housing 80, as the lock mechanism is fitted thereto. In this way, the position at which the keys are inserted into the lock mechanism may be preset to suit a given application.

As shown in Figure 9, an operating member 95 together with a pointer 96 is secured to the first part 22 of the lock mechanism so as to effect rotation of the remaining part of the hand-wheel when the lock mechanism has been released by provision of both keys 24. In other respects this embodiment corresponds to those described above.

It will be appreciated that in those embodiments described above where the diameter of the original hand-wheel is reduced (for example, Figure 6 and Figures 9 to 11) it would be possible to remove the original hand-wheel and replace it by a driving disc having an appropriate diameter of the lock assembly together with a hub configuration adapted to the particular valve or other mechanism to which the disc is to be fitted. In addition, the appearance of the component parts as shown in the drawings may significantly be changed from those illustrated whilst still embodying the same principles of operation.

## Claims

1. A lock assembly for a component (13) supported externally of a housing (11) and rotatable with respect thereto, which lock assembly comprises:
- a lock mechanism (21)having relatively rotatable first (22) and second (23) parts which may be secured against relative rotation by the locking action of the lock mechanism, the first part (22) being adapted for mounting on the rotatable component (13) on the side thereof remote from the housing;
- an engagement device (16) adapted in use to connect to a fixed part of the housing (11) without significant alteration to the housing; and
- interconnection means (32) arranged to connect both to the engagement device (16) and also to the second part (23) of the lock mechanism (21) so that in use the interconnection means (32) extends around the periphery of the rotatable component (13) whereby the component may be turned when the two parts of the lock mechanism are not locked together.

2. A lock assembly as claimed in claim 1, wherein the rotatable component (13) comprises a wheel and the interconnection means comprises a link (32) which extends between the first part of the lock mechanism and the engagement device.

3. A lock assembly as claimed in claim 2, wherein the rotatable component (13) comprises a hand-wheel and the interconnection means comprises a generally U-shaped strap (32) which is adapted in use to extend around the periphery of the hand-wheel.

4. A lock assembly as claimed in claim 2 or claim 3, wherein the strap (32) is substantially rigid in the direction transverse to the length of the strap.

5. A lock assembly as claimed in claim 3, wherein the strap (45) comprises two or more sections (45A, 45B, 45C) hinged together end-to-end.

6. A lock assembly as claimed in claim 1, wherein the rotatable component (13) comprises the remainder (61) of a hand-wheel following the removal of the peripheral region thereof, and the first part (22) of the lock mechanism is provided with an operating member (50) for rotating said remainder when the first and second parts (22,23) of the lock mechanism are freed for relative rotation.

7. A lock assembly as claimed in any of the preceding claims, wherein the engagement device (16) comprises a clamp (18,19) adapted to be secured to the housing (11) by clamping a part thereof between elements of the clamp.

8. A lock assembly as claimed in claim 7, wherein the interconnection means (32) is adjustably connected (40,41) to the clamp device (18,19).

9. A lock assembly as claimed in any of claims 1 to 7, wherein the engagement device comprises a socket member (77,78) adapted in use to engage with an upstanding projection from the housing (79).

10. A lock assembly as claimed in claim 9, wherein the socket member (78) is adjustably mounted on a carrier (74) supported by the second part (23,73) to lie on the side of the rotatable component (61) nearer the housing (79).

11. A lock assembly as claimed in claim 10, wherein the second part of the lock mechanism (23) has a peripheral flange (87) which in use surrounds with clearance the periphery of the rotatable component.

12. A lock assembly as claimed in any of claims 1 to 11, wherein the first part (22) of the lock mechanism has a peripheral flange (72) which is adapted in use to overlie the periphery of the rotatable component.

13. A lock assembly as claimed in any of the preceding claims, wherein the first part of the lock mechanism (22) is attached to the rotatable component by means of a clamp-ring (62,63,64), the rotatable component being clamped between said first part and the clamp ring.

14. A lock assembly as claimed in any of the preceding claims, wherein a ring (63,83) is associated with the first part (22) of the lock mechanism (21) which ring is configured for mounting on the rotatable component.

15. A lock assembly as claimed in any of the preceding claims, wherein the lock mechanism (21) has a receptor (25) for a key (24), the first and second parts (22,23) of the lock mechanism being secured against relative rotation other than when the appropriate key is in the receptor.

16. A lock assembly as claimed in any of claims 1 to 14, wherein the lock mechanism (21) is in the form of an interlock having two receptors (25) for respective keys (24), the first and second parts of the lock mechanism (21) being secured against relative rotation other than when both keys (24) are present in the respective receptors.

17. A lock assembly as claimed in claim 16, wherein withdrawal of a key (24) from the respective receptor (25) may be performed only when the valve to which the assembly is fitted is in a predetermined setting.

18. A fluid-flow control valve having a valve body, top-works (11,20) within which is mounted a valve stem (15) and a hand-wheel (13) rotatably mounted at the end of the top-works remote from the body, in combination with a lock assembly as claimed in any of the preceding claims and with the first part (22) of the lock mechanism (21) connected to the valve hand-wheel, the engagement device (16) non-rotatably engaging the top-works and the interconnection means (32) extending over the periphery of the hand-wheel (13) and connected at its two ends respectively to the engagement device (16) and the second part (23) of the lock mechanism.

19. A method of fitting a lock assembly as claimed in claim 1, claim 2 or claim 6 to a housing having a rotatable hand-wheel (60) mounted thereon, in which method the effective diameter of the hand-wheel (60) is reduced by removing the outer peripheral region of the hand-wheel, the first part (22) of the lock mechanism (21) is secured to the remainder of the hand-wheel (61), and then in either order or effectively simultaneously the engagement device (18) is engaged with the housing (11) and the interconnection means (65) is connected to both the second part (23) of the lock mechanism and also to the engagement device.

20. A method as claimed in claim 19 and in which the hand-wheel (60) is spoked, wherein the effective diameter thereof is reduced by cutting through each spoke (61) at essentially the same radial position.

## Patentansprüche

1. Verriegelungseinrichtung für eine Komponente (13), die außerhalb eines Gehäuses (11) und drehbar in Bezug darauf gehalten ist, wobei die Verriegelungseinrichtung aufweist:
- einen Verriegelungsmechanismus (21) mit einem ersten (22) und zweiten (23) Teil, die relativ zueinander drehbar sind und die gegen relative Drehung durch die Verriegelungswirkung des Verriegelungsmechanismus festgesetzt werden können, wobei das erste Teil zur Anbringung an der drehbaren Komponente (13) auf deren von dem Gehäuse entfernten Seite ausgestaltet ist,
- eine Eingriffseinrichtung (16), die dazu ausgestaltet ist, in Benutzung mit einem feststehenden Teil des Gehäuses (11) ohne wesentliche Veränderung des Gehäuses verbunden zu werden, und
- eine Verbindungseinrichtung (32), die dazu ausgestaltet ist, sowohl mit der Eingriffseinrichtung (16) als auch mit dem zweiten Teil (23) des Verriegelungsmechanismus (21) so verbunden zu werden, dass die Verbindungseinrichtung (32) in Benutzung um den Umfang der drehbaren Komponente (13) herum verläuft, wodurch die Komponente gedreht werden kann, wenn die beiden Teile des Verriegelungsmechanismus nicht miteinander verriegelt sind.

2. Verriegelungseinrichtung nach Anspruch 1, wobei die drehbare Komponente (13) ein Rad und die Verbindungseinrichtung ein Verbindungsglied (32) aufweist, das sich zwischen dem ersten Teil des Verriegelungsmechanismus und der Eingriffseinrichtung erstreckt.

3. Verriegelungseinrichtung nach Anspruch 2, wobei die drehbare Komponente (13) ein Handrad und die Verbindungseinrichtung eine im Wesentlichen U-förmige Klammer (32) aufweist, die dazu ausgestaltet ist, im Betrieb um den Umfang des Handrads herum zu verlaufen.

4. Verriegelungseinrichtung nach Anspruch 2 oder 3, wobei die Klammer (32) im Wesentlichen steif in der Richtung quer zur Länge der Klammer ist.

5. Verriegelungseinrichtung nach Anspruch 3, wobei die Klammer (45) zwei oder mehrere Abschnitt (45A, 45B, 45C) aufweist, deren Enden gelenkig miteinander verbunden sind.

6. Verriegelungseinrichtung nach Anspruch 1, wobei die drehbare Komponente (13) den Rest (21) eines Handrades nach der Entfernung von dessen äußerem Teil aufweist und wobei das erste Teil (22) des Verriegelungsmechanismus mit einem Betätigungsteil (50) versehen ist, um das Restteil zu drehen, wenn das erste und das zweite Teil (22, 23) des Verriegelungsmechanismus zur relativen Drehung freigegeben sind.

7. Verriegelungseinrichtung nach einem der vorhergehenden Ansprüche, wobei die Eingriffseinrichtung (16) eine Klemme (18, 19) aufweist, die dazu ausgestaltet ist, an dem Gehäuse (11) durch Einklemmen eines Teils davon zwischen den Elementen der Klemme festgesetzt zu werden.

8. Verriegelungseinrichtung nach Anspruch 7, wobei die Verbindungseinrichtung (32) einstellbar verbunden (40, 41) mit der Klemmeinrichtung (18, 19) ist.

9. Verriegelungseinrichtung nach einem der Ansprüche 1 bis 7, wobei die Eingriffseinrichtung ein Sockelteil (77, 78) aufweist, das dazu ausgestaltet ist, im Betrieb mit einem von dem Gehäuse (79) vorstehenden Vorsprung einzugreifen.

10. Verriegelungseinrichtung nach Anspruch 9, wobei das Sockelteil (78) einstellbar auf einem Träger (74) montiert ist, der von dem zweiten Teil (23, 73) so getragen wird, um auf der näher am Gehäuse (79) liegenden Seite der drehbaren Komponente (61) zu liegen.

11. Verriegelungseinrichtung nach Anspruch 10, wobei das zweite Teil des Verriegelungsmechanismus (23) einen Umfangsflansch (87), der im Betrieb den Umfang der drehbaren Komponente mit einem Freiraum dazwischen umgibt.

12. Verriegelungseinrichtung nach einem der Ansprüche 1 bis 11, wobei das erste Teil (22) des Verriegelungsmechanismus einen Umfangsflansch (72) hat, der dazu ausgestattet ist, im Betrieb über dem Umfang der drehbaren Komponente zu liegen.

13. Verriegelungseinrichtung nach einem der vorhergehenden Ansprüche, wobei das erste Teil des Verriegelungsmechanismus (22) mittels eines Klemmrings (62, 63, 64) an der drehbaren Komponente angebracht ist, wobei die drehbare Komponente zwischen dem ersten Teil und dem Klemmring eingeklemmt ist.

14. Verriegelungseinrichtung nach einem der vorhergehenden Ansprüche, wobei dem ersten Teil (22) des Verriegelungsmechanismus (21) ein Ring (63, 83) zugeordnet ist, der zur Anbringung an der drehbaren Komponente ausgestaltet ist.

15. Verriegelungseinrichtung nach einem der vorhergehenden Ansprüche, wobei der Verriegelungsmechanismus (21) eine Aufnahme (25) für einen Schlüssel (24) aufweist, wobei das erste und das zweite Teil (22, 23) des Verriegelungsmechanismus gegen relative Drehung zueinander festgesetzt sind, falls sich nicht der richtige Schlüssel in der Aufnahme befindet.

16. Verriegelungseinrichtung nach einem der Ansprüche 1 bis 14, wobei der Verriegelungsmechanismus (21) in Form eines Schlosses mit zwei Aufnahmen (25) für jeweilige Schlüssel (24) vorliegt, wobei das erste und das zweite Teil des Verriegelungsmechanismusses (21) gegen relative Drehung zueinander festgesetzt sind, falls nicht beide Schlüssel (24) sich in den jeweiligen Aufnahmen befinden.

17. Verriegelungseinrichtung nach Anspruch 16, wobei das Abziehen eines Schlüssels (24) aus der jeweiligen Aufnahme (25) nur vorgenommen werden kann, wenn das Ventil, an dem die Einrichtung angebracht ist, in einer vorgegebenen Stellung ist.

18. Fluidströmungssteuerungsventil mit einem Ventilkörper, einem Rahmen (11, 20), in dem ein Ventilschaft (15) gelagert ist, und einem Handrad (13), das drehbar an dem Ende des Rahmens entfernt von dem Körper angebracht ist, in Kombination mit einer Verriegelungseinrichtung nach einem der vorhergehenden Ansprüche und wobei das erste Teil (22) des Verriegelungsmechanismus (21) mit dem Ventilhandrad verbunden ist, die Eingriffseinrichtung (16) nicht drehbar mit dem Rahmen eingreift und die Verbindungseinrichtung (32) über den Umfang des Handrads (13) verläuft und an ihren beiden Enden mit der Eingriffseinrichtung (16) bzw. mit dem zweiten Teil (23) des Verriegelungsmechanismus verbunden ist.

19. Verfahren zur Anbringung einer Verriegelungseinrichtung nach Anspruch 1, Anspruch 2 oder Anspruch 6 an einem Gehäuse, das ein daran drehbar angebrachtes Handrad (60) hat, wobei in dem Verfahren der effektive Durchmesser des Handrads (60) reduziert wird, indem der äußere Teil des Handrads abgenommen wird, wobei das erste Teil (22) des Verriegelungsmechanismus (21) mit dem Rest des Handrads (61) verbunden wird und dann in irgendeiner Reihenfolge oder im Wesentlichen gleichzeitig die Eingriffseinrichtung (18) mit dem Gehäuse (11) in Eingriff gebracht wird und die Verbindungseinrichtung (65) sowohl mit dem zweiten Teil (23) des Verriegelungsmechanismus als auch mit der Eingriffseinrichtung verbunden wird.

20. Verfahren nach Anspruch 19, bei dem das Handrad (60) Speichen aufweist, wobei der effektive Durchmesser des Rads reduziert wird, indem ein Schnitt durch jede Speiche (61) im Wesentlichen bei der gleichen radialen Position durchgeführt wird.

## Revendications

1. Dispositif de verrouillage pour un composant (13) supporté à l'extérieur d'un boîtier (11) et mobile en rotation par rapport à celui-ci, ce dispositif de verrouillage comprenant :
- un mécanisme de verrouillage (21) ayant des première (22) et seconde (23) pièces capables de rotation relative qui peuvent être immobilisées à l'encontre de la rotation relative par l'action de verrouillage du mécanisme de verrouillage, la première pièce (22) étant adaptée à être montée sur le composant rotatif (13) du côté de celui-ci qui est éloigné du boîtier ;
- un dispositif de prise (16) adapté à être relié en service à une pièce fixe du boîtier (11) sans altération significative du boîtier ; et
- des moyens de liaison (32) agencés pour être reliés à la fois au dispositif de prise (16) et aussi à la seconde pièce (23) du mécanisme de verrouillage (21) de façon qu'en service les moyens de liaison (32) s'étendent autour de la périphérie du composant rotatif (13) de sorte que l'on peut faire tourner le composant lorsque les deux pièces du mécanisme de verrouillage ne sont pas verrouillées ensemble.

2. Dispositif de verrouillage selon la revendication 1, dans lequel le composant rotatif (13) comprend une roue et les moyens de liaison comprennent une liaison (32) qui s'étend entre la première pièce du mécanisme de verrouillage et le dispositif de prise.

3. Dispositif de verrouillage selon la revendication 2, dans lequel le composant rotatif (13) comprend un volant et les moyens de liaison comprennent une bretelle (32) en forme générale de U qui est adaptée à s'étendre autour de la périphérie du volant.

4. Dispositif de verrouillage selon la revendication 2 ou 3, dans lequel la bretelle (32) est sensiblement rigide dans la direction transversale à la longueur de la bretelle.

5. Dispositif de verrouillage selon la revendication 3, dans lequel la bretelle (45) comprend deux tronçons (45A, 45B, 45C) ou davantage, articulés bout à bout.

6. Dispositif à verrouillage selon la revendication 1, dans lequel le composant rotatif (13) comprend le reste (61) d'un volant après ablation de sa région périphérique, et la première pièce (22) du mécanisme de verrouillage est munie d'un organe fonctionnel (50) pour faire tourner ledit reste lorsque les première et seconde pièces (22, 23) du mécanisme de verrouillage sont libérées pour leur rotation relative.

7. Dispositif de verrouillage selon l'une quelconque des revendications précédentes, dans lequel le dispositif de prise (16) comprend une pince (18, 19) adaptée à être fixée au boîtier (11) en serrant une partie de celui-ci entre des éléments de la pince.

8. Dispositif de verrouillage selon la revendication 7, dans lequel les moyens de liaison (32) sont reliés de manière réglable (40, 41) au dispositif de pincement (18, 19).

9. Dispositif de verrouillage selon l'une quelconque des revendications 1 à 7, dans lequel le dispositif de prise comprend un organe formant douille (77, 78) adapté en service à venir en prise avec une saillie se dressant à partir du boîtier (79).

10. Dispositif de verrouillage selon la revendication 9, dans lequel l'organe formant douille (78) est monté de manière réglable sur un support (74) porté par la seconde pièce (23, 73) pour s'étendre sur le côté du composant rotatif (61) qui est le plus près du boîtier (79).

11. Dispositif de verrouillage selon la revendication 10, dans lequel la seconde pièce du mécanisme de verrouillage (23) possède un flasque périphérique (87) qui en service entoure avec jeu la périphérie du composant rotatif.

12. Dispositif de verrouillage selon l'une quelconque des revendications 1 à 11, dans lequel la première pièce du mécanisme de verrouillage possède un flasque périphérique (72) qui est adapté à recouvrir en service la périphérie du composant rotatif.

13. Dispositif de verrouillage selon l'une quelconque des revendications précédentes, dans lequel la première pièce du mécanisme de verrouillage (22) est attachée au composant rotatif au moyen d'un anneau de serrage (62, 63, 64), le composant rotatif étant pincé entre la première pièce et l'anneau de serrage.

14. Dispositif de verrouillage selon l'une quelconque des revendications précédentes, dans lequel un anneau (63, 83) est associé à la première pièce (22) du mécanisme de verrouillage (21), cet anneau étant configuré pour se monter sur le composant rotatif.

15. Dispositif de verrouillage selon l'une quelconque des revendications précédentes, dans lequel le mécanisme de verrouillage (21) possède un récepteur (25) pour une clef (24), les première et seconde pièces (22, 23) du mécanisme de verrouillage étant immobilisées à l'encontre de leur rotation relative sauf quand la clef appropriée est dans le récepteur.

16. Dispositif de verrouillage selon l'une quelconque des revendications 1 à 14, dans lequel le mécanisme de verrouillage (21) est sous la forme d'un inter-verrouillage possédant deux récepteurs (25) pour des clefs respectives (24), les première et seconde pièces du mécanisme de verrouillage (21) étant immobilisées à l'encontre de leur relation relative sauf lorsque les deux clefs (24) sont présentes dans leurs récepteurs respectifs.

17. Dispositif de verrouillage selon la revendication 16, dans lequel on ne peut retirer une clef (24) du récepteur respectif (25) que lorsque la vanne qui est équipée du dispositif se trouve dans un réglage pré-déterminé.

18. Vanne de commande d'écoulement comprenant un corps de vanne, une structure supérieure (11, 20) dans laquelle est montée une tige de vanne (15), et un volant (13) monté rotatif à l'extrémité de la structure supérieure qui est éloignée du corps, en combinaison avec un dispositif de verrouillage selon l'une quelconque des revendications précédentes, la première pièce (22) du mécanisme de verrouillage (21) étant reliée au volant de vanne, le dispositif de prise (16) étant en prise non rotative avec la structure supérieure et les moyens de liaison (32) contournant la périphérie du volant (13) et étant reliés à leurs deux extrémités respectivement au dispositif de prise (16) et à la seconde pièce (23) du mécanisme de verrouillage.

19. Procédé pour équiper d'un mécanisme de verrouillage selon l'une des revendications 1, 2 et 6, un boîtier sur lequel est monté un volant rotatif (60), procédé dans lequel le diamètre effectif du volant (60) est réduit en enlevant la région périphérique extérieure du volant, la première pièce (22) du mécanisme de verrouillage (21) est fixée au reste du volant (61), puis dans l'un ou l'autre ordre ou encore simultanément le dispositif de prise (18) est mis en prise avec le boîtier (11) et les moyens de liaison (65) sont reliés à la seconde pièce (23) du mécanisme de verrouillage et aussi au dispositif de prise.

20. Procédé selon la revendication 19, dans lequel le volant (60) possède des rayons, dans lequel le diamètre effectif de celui-ci est réduit en coupant à travers chaque rayon (61) sensiblement à la même position radiale.
